# EUROPEAN PATENT SPECIFICATION

(11) **EP 4 345 538 B1**
(45) Date of publication and mention of the grant of the patent: **24.12.2025**
(21) Application number: 23199986.3
(22) Date of filing: 27.09.2023
(51) Int. Cl.: G03B 17/17, G03B 30/00, G03B 3/10, G03B 5/00

(54) **CAMERA MODULE AND CAMERA MODULE ASSEMBLY INCLUDING THE SAME**
KAMERAMODUL UND KAMERAMODULANORDNUNG DAMIT
MODULE DE CAMÉRA ET ENSEMBLE MODULE DE CAMÉRA LE COMPRENANT

(30) Priority: 27.09.2022 KR 20220122861; 03.03.2023 KR 20230028729
(43) Date of publication of application: 03.04.2024
(73) Proprietor: Samsung Electronics Co., Ltd., Suwon-si, Gyeonggi-do 16677 (KR)
(72) Inventor: KIM, Minook, 16677 Suwon-si (KR); CHO, Yongsik, 16677 Suwon-si (KR); KWON, Jonghoon, 16677 Suwon-si (KR); MOK, Jinmyoung, 16677 Suwon-si (KR); LEE, Seung Hak, 16677 Suwon-si (KR); JUNG, Younggyu, 16677 Suwon-si (KR)
(74) Representative: Marks & Clerk LLP

(56) References cited:
- EP-A1- 4 030 233
- WO-A1-81/03554
- JP-A- S60 114 841
- US-A1- 2021 266 432

## Description

### FIELD

Some example embodiments of the inventive concepts relate to a camera module, and in particular to a camera module comprising multiple reflective members.

### BACKGROUND

With the development of electronic devices, various electronic devices are applied to diverse fields closely related to our lives. Such electronic devices are released in various sizes in accordance with functions and user preferences. For example, the electronic device may include a large-sized touch display for securing wide visibility and convenience of manipulation. The electronic device may include at least one camera module. For example, the electronic device may include at least one camera module located on the display or around the display.US 2021/266432 A1 relates to a camera module including an imaging lens assembly, an image sensor, a first reflecting member and a first driving apparatus. The camera module can further include a second reflecting member. The imaging lens assembly is for converging an imaging light on an image surface. The image sensor is disposed on the image surface. The first reflecting member is located on an image side of the imaging lens assembly, assembled on the first driving apparatus, and for folding the imaging light. In detail, the imaging light enters the camera module from an incident surface (its reference numeral is omitted) of the second reflecting member, and the imaging light is converged on the image surface via the imaging lens assembly.

### SUMMARY

Some example embodiments of the inventive concepts provide a camera module capable of reducing a total thickness and/or a camera module assembly including the same.

Some example embodiments of the inventive concepts provide a camera module capable of securing a back focal length (BFL) greater than a certain value while decreasing a total volume and/or a camera module assembly including the same.

Some example embodiments of the inventive concepts provide a camera module capable of stabilizing images and/or a camera module assembly including the same.

The inventive concepts are not limited to the example embodiments mentioned above, and other objects which have not been mentioned above will be clearly understood to those skilled in the art from the following description.

According to example embodiments of the inventive concepts, there is provided a camera module according to claim 1.

Details of other example embodiments are included in the description and drawings.

At least some of the above and other features of the invention are set out in the claims.

### BRIEF DESCRIPTION OF DRAWINGS

FIG. 1 illustrates a perspective view showing a camera module assembly according to some example embodiments of the inventive concepts.
FIG. 2 illustrates a partial exploded perspective view showing a camera module assembly according to some example embodiments of the inventive concepts.
FIG. 3 illustrates a partial exploded perspective view showing a camera module assembly according to some example embodiments of the inventive concepts.
FIG. 4 illustrates an exploded perspective view showing a camera module assembly according to some example embodiments of the inventive concepts.
FIG. 5 illustrates a perspective view partially showing a camera module assembly according to some example embodiments of the inventive concepts.
FIG. 6 illustrates a perspective view showing a first reflective member and a stabilizer according to some example embodiments of the inventive concepts.
FIG. 7 illustrates an exploded perspective view showing a first reflective member and a stabilizer according to some example embodiments of the inventive concepts.
FIG. 8 illustrates a perspective view showing a second reflective member and a prism housing according to some example embodiments of the inventive concepts.
FIG. 9 illustrates an exploded perspective view showing a second reflective member and a prism housing according to some example embodiments of the inventive concepts.
FIG. 10 illustrates a perspective view showing an image sensor and a sensor support member according to some example embodiments of the inventive concepts.
FIG. 11 illustrates an exploded perspective view showing an image sensor and a sensor support member according to some example embodiments of the inventive concepts.
FIG. 12 illustrates a flow chart showing a camera module driving method according to some example embodiments of the inventive concepts.
FIG. 13 illustrates a cross-sectional view showing a camera module driving method according to some example embodiments of the inventive concepts.
FIG. 14 illustrates a plan view showing a camera module driving method according to some example embodiments of the inventive concepts.
FIG. 15 illustrates a partial cross-sectional view showing a camera module driving method according to some example embodiments of the inventive concepts.
FIG. 16 illustrates a partial cross-sectional view showing a camera module driving method according to some example embodiments of the inventive concepts.
FIG. 17 illustrates a diagram showing a state of use of a camera module assembly according to some example embodiments of the inventive concepts.
FIG. 18 illustrates a side view showing a first reflective member of a camera module according to some example embodiments of the inventive concepts.

### DETAILED DESCRIPTION

The following will now describe some example embodiments of the inventive concepts with reference to the accompanying drawings. Like reference numerals may indicate like components throughout the description.

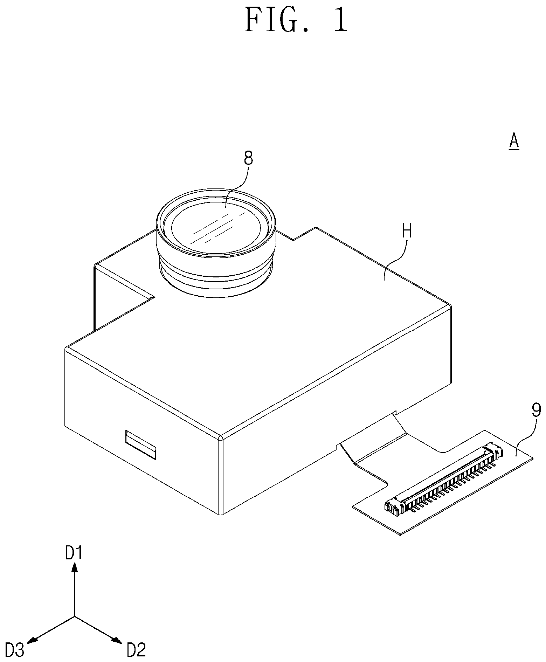

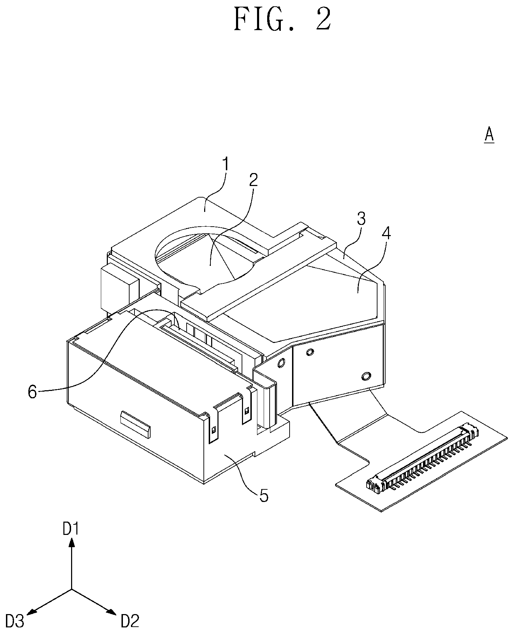

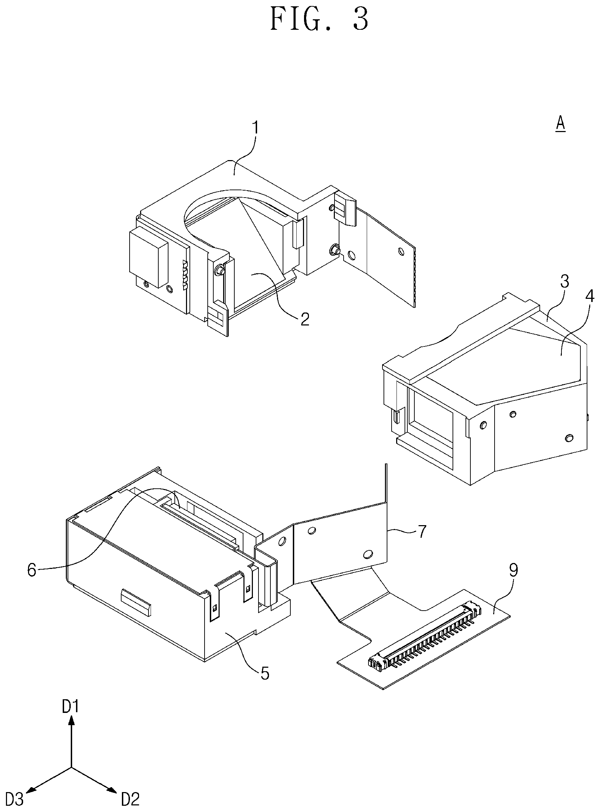

FIG. 1 illustrates a perspective view showing a camera module assembly according to some example embodiments of the inventive concepts. FIG. 2 illustrates a partial exploded perspective view showing a camera module assembly according to some example embodiments of the inventive concepts. FIG. 3 illustrates a partial exploded perspective view showing a camera module assembly according to some example embodiments of the inventive concepts.

In this description, symbol D1 may indicate a first direction, symbol D2 may indicate a second direction that intersects the first direction D1, and symbol D3 may indicate a third direction that intersects each of the first direction D1 and the second direction D2. The first direction D1 may be called a vertical direction. Each of the second direction D2 and the third direction D3 may be called a horizontal direction. The first and second directions D1 and D2 may be, for example, perpendicular or almost perpendicular to each other. The first and second direction intersect one another, i.e. the first direction and the second direction are at an angle to one another. The angle may be approximately 90 degrees. In other words, the first direction and the second direction may be substantially perpendicular to one another. The first and third directions D1 and D3 may be, for example, perpendicular or almost perpendicular to each other. The first and third direction intersect one another, i.e. the first direction and the third direction are at an angle to one another. The angle may be approximately 90 degrees. In other words, the first direction and the third direction may be substantially perpendicular to one another. The second and third directions D2 and D3 may be, for example, perpendicular or almost perpendicular to each other. The second and third direction intersect one another, i.e. the second direction and the third direction are at an angle to one another. The angle may be approximately 90 degrees. In other words, the second direction and the third direction may be substantially perpendicular to one another.

Referring to FIGS. 1 to 3, a camera module assembly A may be provided. The camera module assembly A may receive external light to generate an electrical signal. The camera module assembly A may include a camera module (not designated by a reference numeral) and an image sensor 6. The camera module may indicate a component other than the image sensor 6 of the camera module assembly A. The image sensor 6 may be combined with the camera module. The image sensor 6 may convert an optical signal received by the camera module into an electrical signal. The image sensor 6 may include a charge coupled device (CCD) or a complementary metal-oxide semiconductor (CMOS) image sensor (CIS), but the inventive concepts are not limited thereto. The camera module assembly A may be used for an electronic device. For example, the camera module assembly A may be used for a smart phone and/or a pad (e.g., a tablet computing device). The camera module assembly A may include a first reflective member 2, a telephoto lens assembly 8, a stabilizer 1, a second reflective member 4, a prism housing 3, a sensor support member 5, a connection substrate 7, a connection terminal 9, and a housing H.

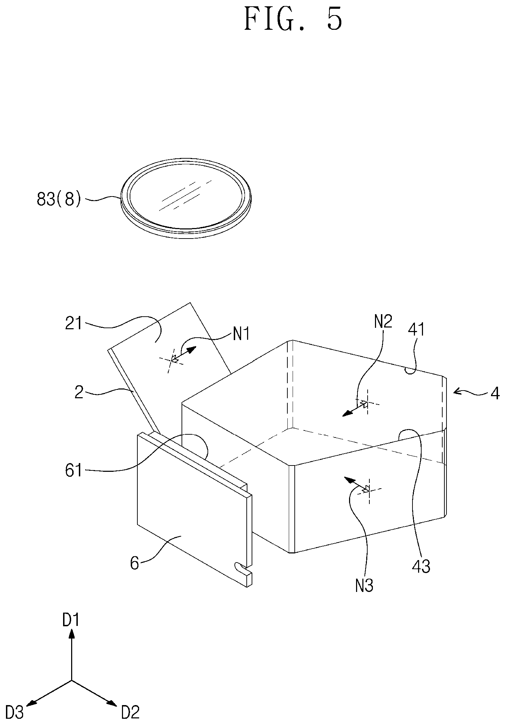

The first reflective member 2 reflects light. For example, the first reflective member 2 reflects light that has passed through the telephoto lens assembly 8. The first reflective member 2 includes a first reflective surface (e.g., see 21 of FIG. 5). The first reflective member 2 may include, for example, a mirror. The inventive concepts, however, are not limited thereto, and the first reflective member 2 may include a prism. Light traveling parallel or substantially parallel to the first direction D1 is reflected by the first reflective member 2 to proceed in a horizontal direction. The light reflected from the first reflective member 2 travels to the second reflective member 4. For example, light that has passed through the telephoto lens assembly 8 is reflected by the first reflective member 2 to advance toward the second reflective member 4. A detailed description thereof will be further discussed below.

The telephoto lens assembly 8 may be positioned on the first reflective member 2. The telephoto lens assembly 8 is disposed spaced apart in the first direction D1 from the first reflective member 2. External light may be introduced through the telephoto lens assembly 8 into the camera module assembly A. External light travels in a direction parallel or substantially parallel to the first direction D1 to pass through the telephoto lens assembly 8. For example, external light may pass in a substantially vertical direction through the telephoto lens assembly. A detailed description thereof will be further discussed below.

The stabilizer 1 may support the first reflective member 2. The stabilizer 1 may drive the first reflective member 2 to move. For example, the stabilizer 1 may drive the first reflective member 2 to move in a parallel direction and/or rotationally. It may thus be possible to correct light incident on the image sensor 6. For example, the stabilizer 1 may be an optical image stabilization (OIS) apparatus. The stabilizer 1 will be further discussed below.

The second reflective member 4 reflects light reflected from the first reflective member 2. The second reflective member 4 may reflect light to a horizontal direction toward the image sensor 6. The second reflective member 4 is disposed spaced apart in the second direction D2 from the first reflective member 2. The second reflective member 4 will be further discussed below.

The prism housing 3 may support the second reflective member 4. The prism housing 3 may be combined with each of the stabilizer 1 and the sensor support member 5. The prism housing 3 may fix the second reflective member 4 to a certain position. For example, the same relative distance may be provided between the stabilizer 1 and the second reflective member 4 combined with the prism housing 3 and/or between the sensor support member 5 and the second reflective member 4 combined with the prism housing 3. The prism housing 3 will be further discussed in detail below.

The sensor support member 5 may support the image sensor 6. The sensor support member 5 may drive the image sensor 6 to move. For example, the sensor support member 5 may drive the image sensor 6 to move in the third direction D3. It may therefore be possible to adjust a focus of an image formed on the image sensor 6. For example, the sensor support member 5 may include an autofocus (AF) device. The sensor support member 5 may be combined with the prism housing 3. The sensor support member 5 may be disposed spaced apart in the third direction D3 from the second reflective member 4. A detailed description thereof will be further discussed below.

One side of the connection substrate 7 may be combined with the sensor support member 5. Alternatively, or in addition, one side of the connection substrate 7 may be combined with the image sensor 6. The connection substrate 7 may be electrically connected to the image sensor 6. The connection substrate 7 may electrically connect the image sensor 6 to an external device. The connection substrate 7 may include a printed circuit board (PCB). For example, the connection substrate 7 may include a flexible printed circuit board (FPCB).

The connection terminal 9 may be combined with the connection substrate 7. An electrical signal produced from the image sensor 6 may be outwardly transferred through the connection terminal 9.

The housing H may cover one or more of the first reflective member 2, the stabilizer 1, the second reflective member 4, the prism housing 3, the sensor support member 5, the connection substrate 7, the connection terminal 9, and the image sensor 6. The housing H may protect the image sensor 6 against external impact.

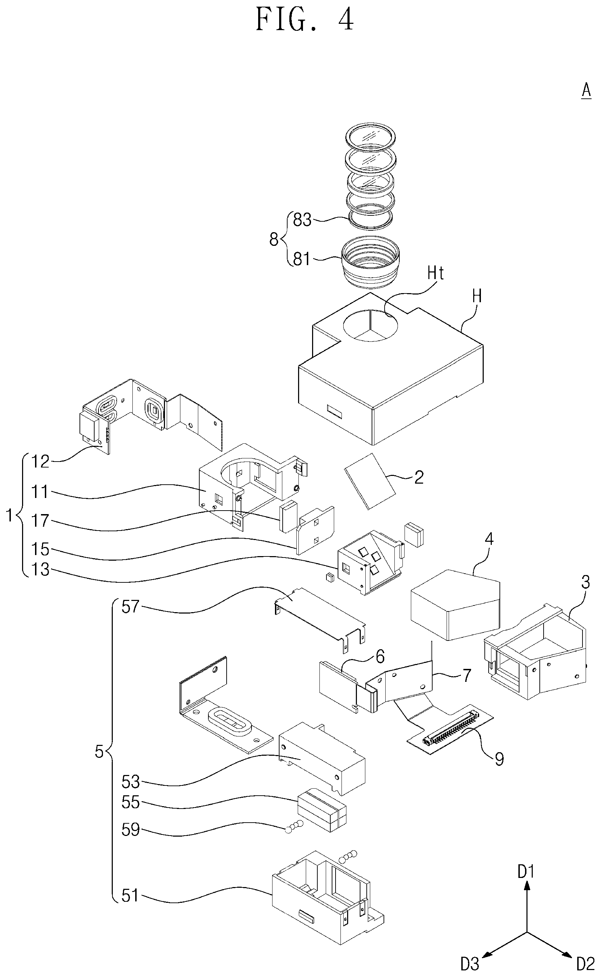

FIG. 4 illustrates an exploded perspective view showing a camera module assembly according to some example embodiments of the inventive concepts. FIG. 5 illustrates a perspective view partially showing a camera module assembly according to some example embodiments of the inventive concepts.

Referring to FIGS. 4 and 5, the telephoto lens assembly 8 may include a lens housing 81 and a telephoto lens 83. The lens housing 81 may provide a through hole (not designated by a reference numeral) that extends in the first direction D1. The lens housing 81 may be aligned with a through hole Ht of the housing H. The lens housing 81 may support the telephoto lens 83. The telephoto lens 83 may be disposed in the lens housing 81. The telephoto lens 83 may be disposed in the first direction D1 from the first reflective surface 21. The telephoto lens 83 may have an axis (not shown) parallel or substantially parallel to the first direction D1. External light may pass in the first direction D1 through the telephoto lens 83 to reach the first reflective member 2. The telephoto lens 83 may include a convex lens and/or a concave lens. The telephoto lens 83 may be provided in plural. The plurality of telephoto lenses 83 may be arranged in the first direction D1. External light may be magnified while passing through the plurality of telephoto lenses 83. For convenience, the following description will focus on a single telephoto lens 83.

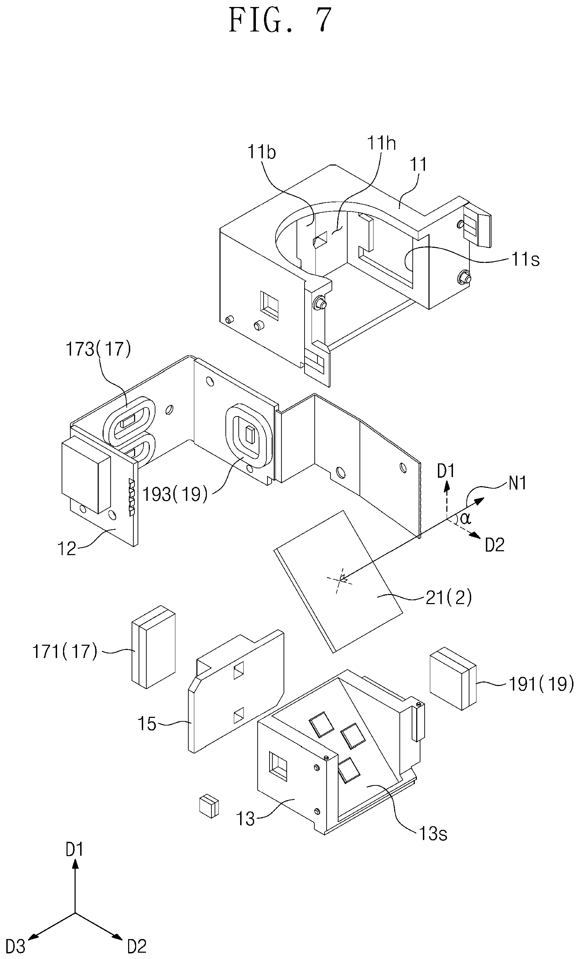

The first reflective member 2 includes the first reflective surface 21. The first reflective surface 21 may have a first normal line N1. The first normal line N1 may be positioned on an imaginary plane defined by the first direction D1 and the second direction D2. For example, the first normal line N1 may be substantially perpendicular to the third direction D3. The first normal line N1 may make a first angle (e.g., see α of FIG. 7) with respect to the second direction D2. Therefore, the first reflective surface 21 may face the second reflective member 4 and the telephoto lens 83. Light that has passed through the telephoto lens 83 may be reflected by the first reflective surface 21 to enter the second reflective member 4.

The second reflective member 4 includes a second reflective surface 41 and a third reflective surface 43.

The third reflective surface 43 may be disposed in the second direction D2 from the first reflective surface 21. The third reflective surface 43 reflects light reflected from the first reflective surface 21. For example, light reflected from the first reflective surface 21 is reflected by the third reflective surface 43 to travel toward the second reflective surface 41. The third reflective surface 43 may have a third normal line N3. The third normal line N3 may be positioned on an imaginary plane defined by the second direction D2 and the third direction D3. For example, the third normal line N3 may be substantially perpendicular to the first direction D1.

The second reflective surface 41 may be disposed in the second direction D2 from the first reflective surface 21. The second reflective surface 41 may reflect light reflected from the third reflective surface 43. For example, light reflected from the third reflective surface 43 may be reflected by the second reflective surface 41 to travel toward the image sensor 6. The second reflective surface 41 may have a second normal line N2. The second normal line N2 may be positioned on an imaginary plane defined by the second direction D2 and the third direction D3. For example, the second normal line N2 may be substantially perpendicular to the first direction D1.

The second reflective member 4 includes a pentagonal prism. Each of the second and third reflective surfaces 41 and 43 is one of multiple lateral surfaces of the pentagonal prism. It is described that light reflected from the first reflective member 2 is reflected twice by the second reflective member 4, but the inventive concepts are not limited thereto. For another example, light reflected from the first reflective member 2 may be reflected three or more times by the second reflective member 4 to enter the image sensor 6.

The image sensor 6 may be disposed spaced apart in the third direction D3 from the second reflective surface 41. A front surface 61 of the image sensor 6 may face the second reflective surface 41. Light reflected from the second reflective surface 41 may reach the front surface 61 of the image sensor 6.

An imaginary plane may be defined by the second normal line N2 and the third normal line N3 that meet each other at one point (e.g., intersect at a single point). The first normal line N1 may meet (e.g., intersect), at one point, the imaginary plane defined by the second normal line N2 and the third normal line N3. The first normal line N1 may be positioned on a location that crosses each of the second and third normal lines N2 and N3. The first normal line N1 may be parallel or substantially parallel to the front surface 61 of the image sensor 6.

External light may travel in a direction parallel or substantially parallel to the first direction D1 to pass through the telephoto lens 83. For example, external light may vertically pass through the telephoto lens 83. The light that has passed through the telephoto lens 83 may be reflected by the first reflective surface 21 to travel in a horizontal direction. The light reflected from the first reflective surface 21 may be reflected in a horizontal direction by the third reflective surface 43 and/or the second reflective surface 41. The light, which is reflected in a horizontal direction by the third reflective surface 43 and/or the second reflective surface 41, may be incident on the front surface 61 of the image sensor 6.

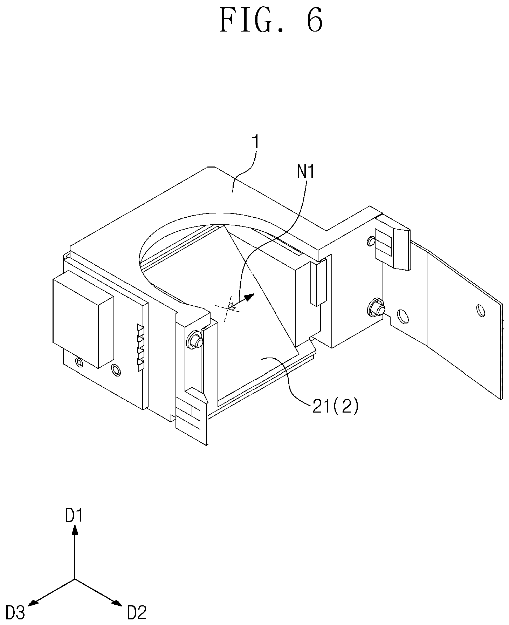

Non-described components of FIG. 4 will be discussed below with reference to FIGS. 6 to 11.

FIG. 6 illustrates a perspective view showing a first reflective member and a stabilizer according to some example embodiments of the inventive concepts. FIG. 7 illustrates an exploded perspective view showing a first reflective member and a stabilizer according to some example embodiments of the inventive concepts.

Referring to FIGS. 4, 6, and 7, the first normal line N1 may make a first angle α with respect to the second direction D2. The first angle α may be about 45°, but the inventive concepts are not limited thereto.

The stabilizer 1 may include a reflective holder 13, an intermediate holder 15, a stabilizer housing 11, a first coil support member 12, a first actuator 17, and a second actuator 19.

The reflective holder 13 may support the first reflective member 2. For example, the reflective holder 13 may support the first reflective member 2 to allow the first normal line N1 to make the first angle α with respect to the second direction D2. The reflective holder 13 may include a support surface 13s. The support surface 13s may be substantially parallel to the first reflective surface 21, but the inventive concepts are not limited thereto.

The intermediate holder 15 may be combined with a rear surface of the reflective holder 13. The intermediate holder 15 may be positioned between the stabilizer housing 11 and the reflective holder 13.

The stabilizer housing 11 may provide an internal space 11h, a rear exposure hole 11b, and a side exposure hole 11s. The internal space 11h may accommodate the reflective holder 13 and/or the intermediate holder 15. The reflective holder 13 and/or the intermediate holder 15 in the internal space 11h may be exposed through the rear exposure hole 11b and the side exposure hole 11s to the first coil support member 12.

The first coil support member 12 may be combined with the stabilizer housing 11. The first coil support member 12 may be fixed to the stabilizer housing 11. The first coil support member 12 may surround lateral surfaces of the stabilizer housing 11. The first coil support member 12 may include a flexible printed circuit board (FPCB), but the inventive concepts are not limited thereto.

The first actuator 17 may drive the reflective holder 13 to move relative to the stabilizer housing 11. For example, the first actuator 17 may drive the reflective holder 13 to move in the second direction D2 relative to the stabilizer housing 11. The first actuator 17 may include a first magnet 171 and a first coil 173. For example, the first actuator 17 may be a voice coil motor (VCM). The first magnet 171 may be combined with a rear surface of the intermediate holder 15. The first coil 173 may be fixed to the stabilizer housing 11. The first coil 173 may be fixedly combined with a front surface of the first coil support member 12, thereby being fixed to the stabilizer housing 11. The first coil 173 may be provided in plural. For example, two first coils 173 may be provided. The two first coils 173 may be disposed spaced apart from each other in the first direction D1. Unless otherwise specifically stated, a single first coil 173 will be discussed. It is illustrated and described that the first actuator 17 is a voice coil motor (VCM), but the inventive concepts are not limited thereto. For example, the first actuator 17 may include any other types of actuator.

The second actuator 19 may drive the reflective holder 13 to move relative to the stabilizer housing 11. For example, the second actuator 19 may drive the reflective holder 13 to move in the third direction D3 relative to the stabilizer housing 11. The second actuator 19 may include a second magnet 191 and a second coil 193. For example, the second actuator 19 may be a voice coil motor (VCM). The second magnet 191 may be combined with a lateral surface of the reflective holder 13. The second coil 193 may be fixed to the stabilizer housing 11. For example, the second coil 193 may be fixedly combined with an inner surface of the first coil support member 12, thereby being fixed to the stabilizer housing 11.

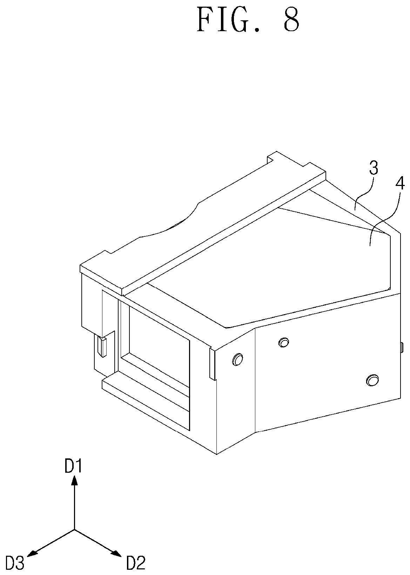

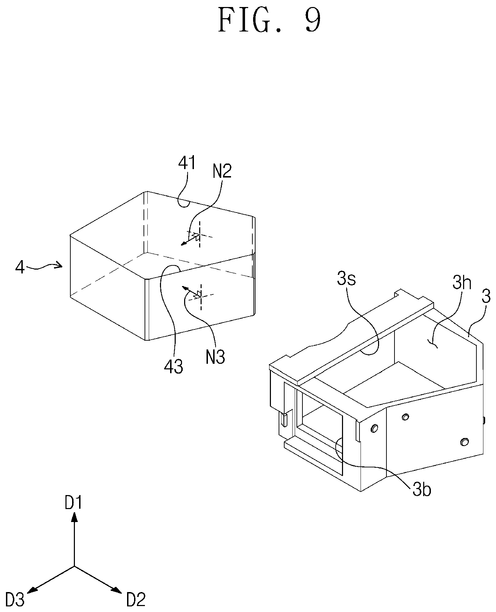

FIG. 8 illustrates a perspective view showing a second reflective member and a prism housing according to some example embodiments of the inventive concepts. FIG. 9 illustrates an exploded perspective view showing a second reflective member and a prism housing according to some example embodiments of the inventive concepts.

Referring to FIGS. 4, 8, and 9, the prism housing 3 may provide a prism placement space 3h, a first side exposure hole 3s, and a second side exposure hole 3b. The second reflective member 4 may be disposed in the prism placement space 3h. At least a portion of lateral surfaces of the second reflective member 4 may be exposed through the first side exposure hole 3s and the second side exposure hole 3b.

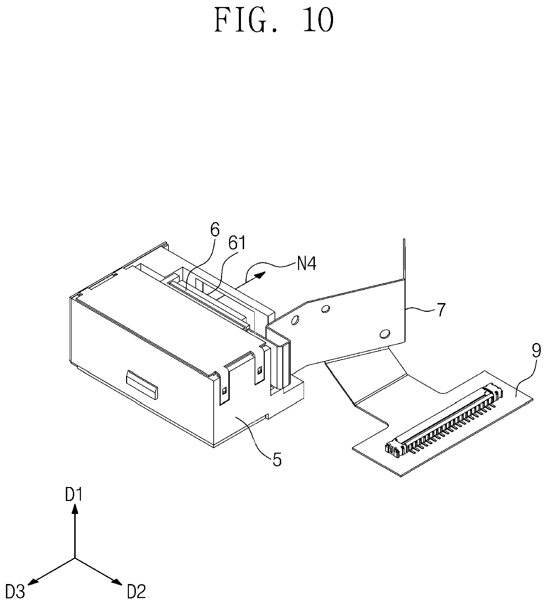

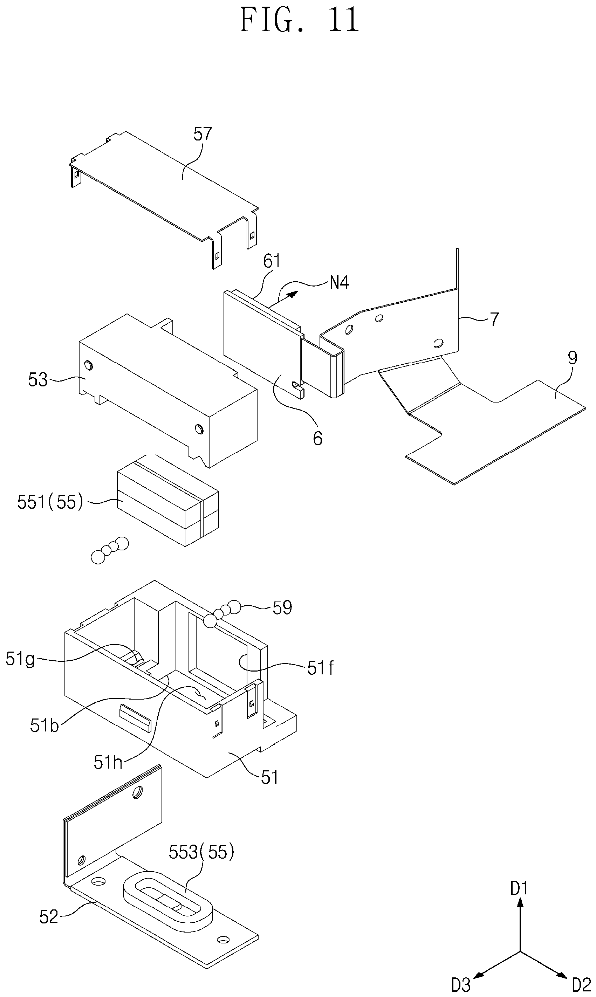

FIG. 10 illustrates a perspective view showing an image sensor and a sensor support member according to some example embodiments of the inventive concepts. FIG. 11 illustrates an exploded perspective view showing an image sensor and a sensor support member according to some example embodiments of the inventive concepts.

Referring to FIGS. 4, 10, and 11, the front surface 61 of the image sensor 6 may have a fourth normal line N4. The fourth normal line N4 may be, for example, parallel or substantially parallel to the third direction D3.

The sensor support member 5 may include an autofocus (AF) housing 51, an AF coil support member 52, an AF carrier 53, an AF actuator 55, an AF cover 57, and a guide ball 59.

The AF housing 51 may provide an AF internal space 51h, an AF front exposure hole 51f, an AF bottom exposure hole 51b, and a ball groove 51g. The AF carrier 53 may be disposed in the AF internal space 51h. The AF internal space 51h may be outwardly exposed through the AF front exposure hole 51f and the AF bottom exposure hole 51b. The guide ball 59 may be disposed in the ball groove 51g.

The AF coil support member 52 may be combined with the AF housing 51. The AF coil support member 52 may be fixed to the AF housing 51. The AF coil support member 52 may include a flexible printed circuit board (FPCB), but the inventive concepts are not limited thereto. The AF coil support member 52 may further include a yoke.

The AF carrier 53 may support the image sensor 6. For example, the image sensor 6 may be fixedly combined with the AF carrier 53. The AF carrier 53 may be inserted into the AF internal space 51h. The AF carrier 53 inserted into the AF internal space 51h may have a front surface that is outwardly exposed by the AF front exposure hole 51f. The AF carrier 53 inserted into the AF internal space 51h may have a bottom surface that is outwardly exposed by the AF bottom exposure hole 51b.

The AF actuator 55 may be positioned between the AF carrier 53 and the AF housing 51. The AF actuator 55 may drive the AF carrier 53 to move relative to the AF housing 51. For example, the AF actuator 55 may drive the AF carrier 53 to move in the third direction D3 relative to the AF housing 51. The AF actuator 55 may include an AF magnet 551 and an AF coil 553. For example, the AF actuator 55 may be a voice coil motor (VCM). The AF magnet 551 may be fixedly combined with the AF carrier 53. For example, the AF magnet 551 may be inserted into the AF carrier 53. The AF coil 553 may be fixed to the AF housing 51. For example, the AF coil 553 may be combined with the AF coil support member 52 and fixed with respect to the AF housing 51. It is illustrated and described that the AF actuator 55 is a voice coil motor (VCM), but the inventive concepts are not limited thereto. For example, the AF actuator 55 may include any other types of actuator.

The AF cover 57 may be combined with the AF housing 51 and/or the AF carrier 53. The AF cover 57 may inhibit or prevent the AF carrier 53 inserted into the AF housing 51 from escaping from the AF housing 51.

The guide ball 59 may be positioned between the AF housing 51 and the AF carrier 53. The guide ball 59 may be disposed in the ball groove 51g. The AF carrier 53 may be supported by the guide ball 59. The guide ball 59 may guide movement of the AF carrier 53. The guide ball 59 may be provided in plural. For convenience, the following description will focus on a single guide ball 59.

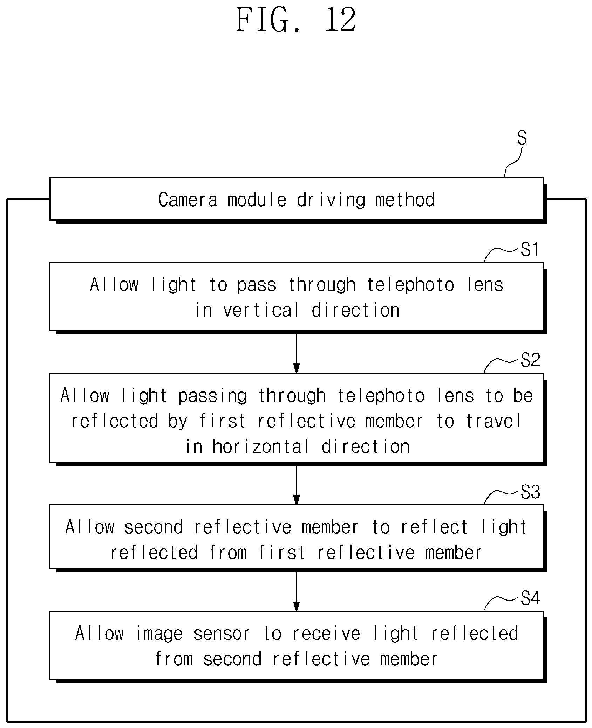

FIG. 12 illustrates a flow chart showing a camera module driving method according to some example embodiments of the inventive concepts.

Referring to FIG. 12, a camera module driving method S may be provided. The camera module driving method S may be an image capturing method using the camera module assembly A discussed with reference to FIGS. 1 to 11. The camera module driving method S may include allowing light to vertically pass through a telephoto lens (S1), allowing the light passing through the telephoto lens to be reflected by a first reflective member to travel in a horizontal direction (S2), allowing a second reflective member to reflect the light reflected from the first reflective member (S3), and allowing an image sensor to receive the light reflected from the second reflective member (S4).

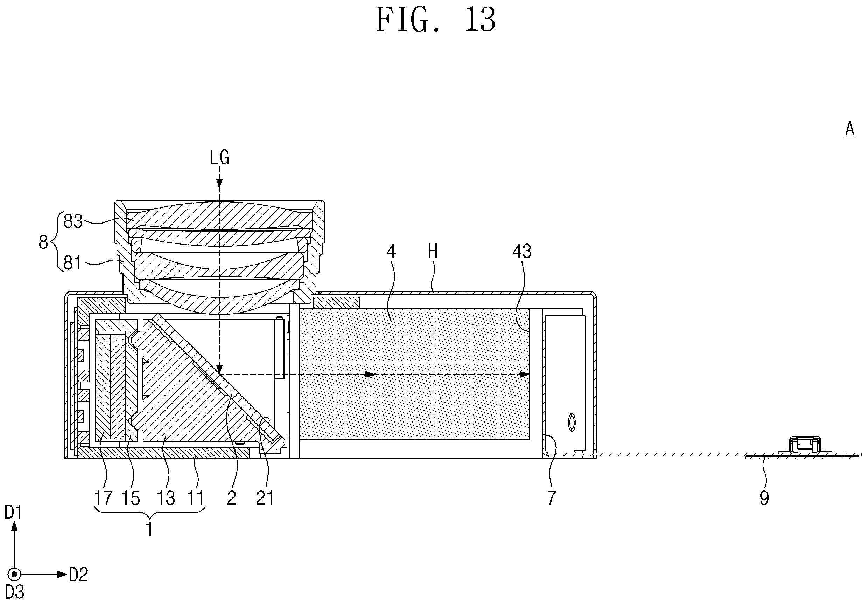

The camera module driving method S of FIG. 12 will be further discussed in detail below with reference to FIGS. 13 to 16.

FIG. 13 illustrates a cross-sectional view showing a camera module driving method according to some example embodiments of the inventive concepts.

Referring to FIGS. 12 and 13, the step S1 may include allowing light LG to pass through the telephoto lens 83 in a direction parallel or substantially parallel to the first direction D1. The light LG may be magnified while passing through the telephoto lens 83.

The step S2 may include causing the first reflective member 2 to reflect the light LG. For example, the first reflective surface 21 may reflect the light LG to the horizontal direction. The light LG vertically incident may be reflected in the horizontal direction by the first reflective surface 21. The light LG reflected from the first reflective surface 21 travels toward the second reflective member 4.

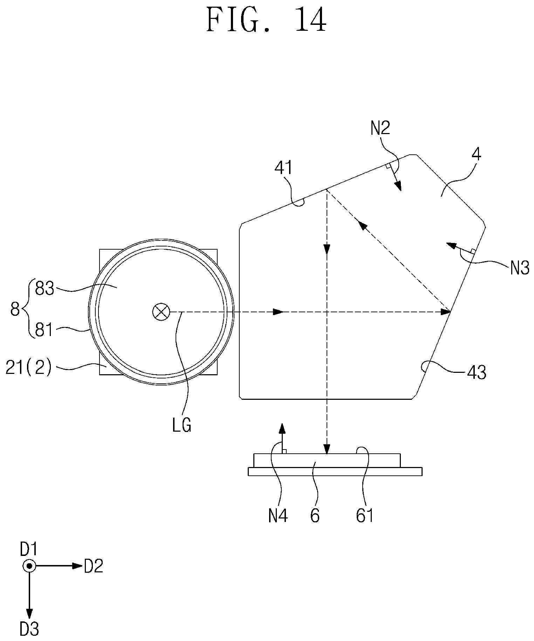

FIG. 14 illustrates a plan view showing a camera module driving method according to some example embodiments of the inventive concepts.

Referring to FIGS. 12 and 14, the step S3 includes causing the third reflective surface 43 to reflect the light LG. The light LG reflected from the third reflective surface 43 reaches the second reflective surface 41. The second reflective surface 41 may reflect again the light LG.

The step S4 may include causing the front surface 61 of the image sensor 6 to receive the light LG reflected from the second reflective surface 41. The light LG may travel in the horizontal direction to reach the image sensor 6. When the light LG is incident on the image sensor 6, the image sensor 6 may covert the light LG into an electrical signal.

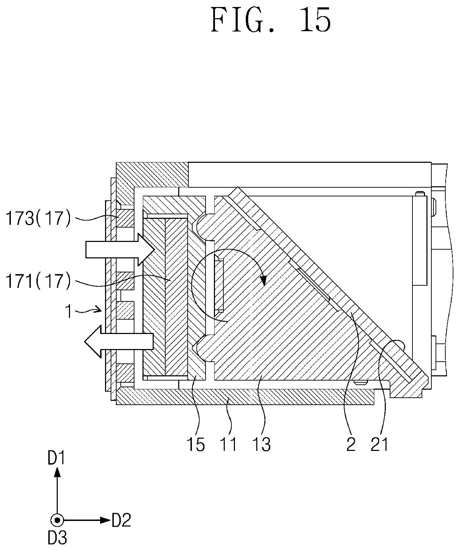

FIG. 15 illustrates a partial cross-sectional view showing a camera module driving method according to some example embodiments of the inventive concepts.

Referring to FIG. 15, the first actuator 17 may drive the first reflective member 2 to move. For example, different signals may be applied to two first coils 173 to force the first actuator 17 to rotate the reflective holder 13 and the first reflective member 2. The first reflective member 2 may rotate about an axis parallel or substantially parallel to the third direction D3.

Although not shown, the second actuator (e.g., see 19 of FIG. 7) may drive the first reflective member 2 to move in the third direction D3.

The first actuator 17 and/or the second actuator 19 may drive the first reflective surface 21 to move. Therefore, it may be possible to change a path of light incident on the first reflective surface 21 after passing through the telephoto lens (e.g., see 83 of FIG. 5).

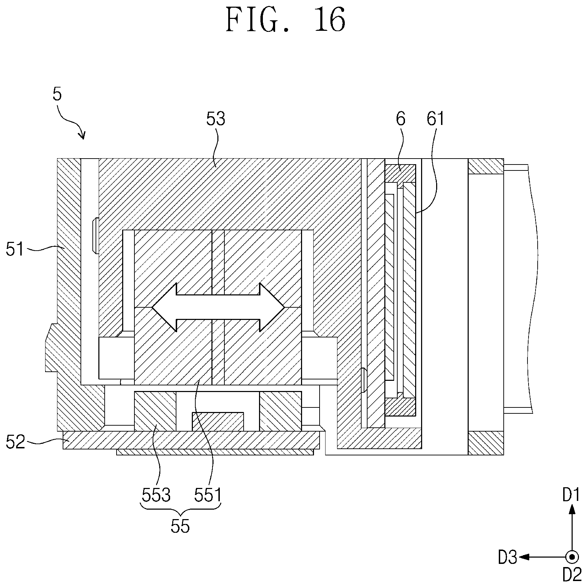

FIG. 16 illustrates a partial cross-sectional view showing a camera module driving method according to some example embodiments of the inventive concepts.

Referring to FIG. 16, the AF actuator 55 may drive the image sensor 6 to move. For example, the AF actuator 55 may drive the AF carrier 53 to move in the third direction D3 to adjust a position of the image sensor 6. Therefore, it may be possible to adjust a focus of an image formed on the image sensor 6.

According to a camera module and a camera module assembly including the same in accordance with some example embodiments of the present inventive concepts, light passing through a telephoto lens may be reflected in a horizontal direction. Light reflected from a first reflective member may be reflected again in the horizontal direction by a second reflective member and then may be incident on an image sensor. For example, after the reflection from the first reflective member and before the incidence on the image sensor, a path of the light may be in the horizontal direction. The first reflective member, the second reflective member, and the image sensor may be disposed in the horizontal direction. Accordingly, the camera module may decrease in total thickness.

According to a camera module and a camera module assembly including the same in accordance with some example embodiments of the inventive concepts, light may pass through a telephoto lens before being reflected from a first reflective member. The light passing through the telephoto lens may have an increased path before incidence on an image sensor. Thus, a back focal length (BFL) may increase. For example, the BFL may be sufficiently obtained while reducing a length in a horizontal direction of the camera module.

According to a camera module and a camera module assembly including the same in accordance with some example embodiments of the inventive concepts, a stabilizer may be used to move a first reflective member. Thus, an image may be stabilized. As the first reflective member moves to stabilize the image, an image sensor may not be desired or required to move for the image stabilization. Accordingly, a separate component required for movement of the image sensor may be omitted to reduce a volume of the camera module.

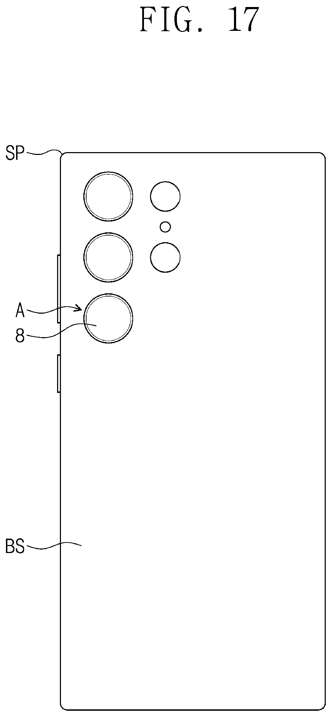

FIG. 17 illustrates a diagram showing a state of use of a camera module assembly according to some example embodiments of the inventive concepts.

Referring to FIG. 17, the camera module assembly A may be applied to an electronic device SP. The electronic device SP may be, for example, a smart phone. In some example embodiments, the camera module assembly A may be exposed on a rear surface BS of the electronic device SP. The inventive concepts, however, are not limited thereto, and the camera module assembly A may be applied to other electronic devices.

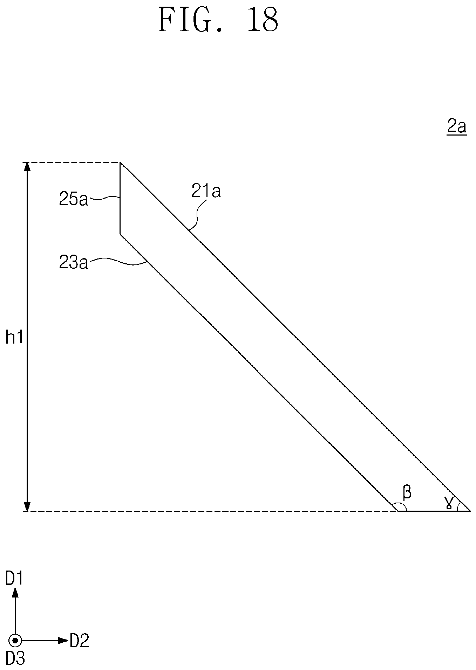

FIG. 18 illustrates a side view showing a first reflective member of a camera module according to some example embodiments of the inventive concepts.

The following will omit a description substantially the same as or similar to that discussed with reference to FIGS. 1 to 17.

Referring to FIG. 18, a first reflective member 2a may be provided. The first reflective member 2a may include a first reflective surface 21a, a support surface 23a, and a connection surface 25a.

The first reflective surface 21a may be substantially the same as or similar to that discussed with reference to FIG. 7.

The support surface 23a may stand opposite to the first reflective surface 21a. The support surface 23a may be substantially parallel to the first reflective surface 21a.

The connection surface 25a may connect the first reflective surface 21a to the support surface 23a. An obtuse angle β may be made between the connection surface 25a and the support surface 23a. In addition, an acute angle γ may be made between the connection surface 25a and the first reflective surface 21a. For example, the first reflective member 2a may have a chamfer structure. The first reflective member 2a may have a height h1 ranging from about 4.0 mm to about 6.50 mm. For example, the height h1 of the first reflective member 2a may be equal to or less than about 5.61 mm. The inventive concepts, however, are not limited to the values mentioned above.

According to a camera module and a camera module assembly including the same in accordance with some embodiments of the inventive concepts, as a first reflective member has chamfer structure, the first reflective member may decrease in height and/or width in a horizontal direction. Therefore, the camera module assembly may decrease in overall volume.

According to a camera module and a camera module assembly including the same of the inventive concepts, a total thickness may decrease.

According to a camera module and a camera module assembly including the same of the inventive concepts, a back focal length (BFL) equal to or greater than a certain value may be securely obtained while reducing an overall thickness.

According to a camera module and a camera module assembly including the same of the inventive concepts, an image may be stabilized.

Effects of the inventive concepts are not limited to the examples mentioned above.

It will be understood that elements and/or properties thereof described herein as being "substantially" the same and/or identical encompasses elements and/or properties thereof that have a relative difference in magnitude that is equal to or less than 10%. Further, regardless of whether elements and/or properties thereof are modified as "substantially," it will be understood that these elements and/or properties thereof should be construed as including a manufacturing or operational tolerance (e.g., ±10%) around the stated elements and/or properties thereof.

One or more of the elements disclosed above may include or be implemented in one or more processing circuitries such as hardware including logic circuits; a hardware/software combination such as a processor executing software; or a combination thereof. For example, the processing circuitries more specifically may include, but is not limited to, a central processing unit (CPU), an arithmetic logic unit (ALU), a digital signal processor, a microcomputer, a field programmable gate array (FGPA), a System-on-Chip (SoC), a programmable logic unit, a microprocessor, application-specific integrated circuit (ASIC), etc.

Although the inventive concepts have been described in connection with some example embodiments of the inventive concepts illustrated in the accompanying drawings, it will be understood to those skilled in the art that various changes and modifications may be made as long as supported by the appended claims. It therefore will be understood that the example embodiments described above are just illustrative but not limitative in all aspects.

## Claims

1. A camera module, comprising:
a first reflective member (2) including a first reflective surface;
a telephoto lens (83) spaced apart from the first reflective surface in a first direction (D1);
a second reflective member (4) spaced apart from the first reflective surface in a second direction (D2), the second direction (D2) intersecting the first direction (D1); and
a sensor support member (5) configured to support an image sensor (6),
wherein the second reflective member (4) includes a pentagonal prism including multiple lateral surfaces, the multiple lateral surfaces including:
a second reflective surface (41) configured to reflect light from the first reflective surface toward the sensor support member (5); and
a third reflective surface (43) configured to reflect the light from the first reflective surface toward the second reflective surface (41),
wherein the sensor support member (5) is spaced from the second reflective surface in a third direction (D3), the third direction (D3) intersecting each of the first direction (D1) and the second direction (D2).

2. The camera module of any preceding claim, further comprising a stabilizer (1) configured to drive movement of the first reflective member (2), wherein the stabilizer (1) includes:
a reflective holder (13) configured to support the first reflective member (2);
a stabilizer housing (11); and
a first actuator (17) configured to drive the reflective holder (13) to move relative to the stabilizer housing (11).

3. The camera module of claim 2, wherein:
the stabilizer (1) further includes an intermediate holder (15) on a rear surface of the reflective holder (13), and
the first actuator (17) includes a first coil fixed with respect to the stabilizer housing (11), and a first magnet (171) combined with a rear surface of the intermediate holder (15).

4. The camera module of claim 3, further comprising a second coil (193), wherein the first coil (173) is spaced apart from the second coil (193) in the first direction (D1).

5. The camera module of any of claims 2 to 4, wherein:
the stabilizer (1) further includes a second actuator (11) configured to drive the reflective holder (13) to move relative to the stabilizer housing (11), and
the second actuator (11) includes a second coil (193) fixed with respect to the stabilizer housing (11), and a second magnet (191) on a lateral surface of the reflective holder (13).

6. The camera module of any preceding claim, wherein an axis of the telephoto lens (83) is parallel to the first direction (D1).

7. A camera module of any preceding claim, wherein the first reflective member (2) is configured to reflect light received from outside the camera module, wherein the image sensor (6) is configured to receive light reflected from the second reflective member (4), wherein the first reflective surface (2) is configured to reflect light to the second reflective member (4),
wherein the second reflective member (4) includes the third reflective surface (43) configured to reflect light reflected from the first reflective surface, and
wherein the second reflective surface (41) is configured to reflect light from the third reflective surface toward the sensor support member (5),
wherein the first reflective surface has a first normal line,
wherein the second reflective surface has a second normal line (N2),
wherein the third reflective surface has a third normal line (N3), and the second normal line and the third normal line intersect at one point, and
wherein the first normal line and a plane intersect at one point, the plane defined by the second normal line and the third normal line.

8. The camera module of any preceding claim, wherein the telephoto lens (83) is configured to allow light external to the camera module to pass through the telephoto lens (83) before reaching the first reflective member (2).

9. The camera module of any preceding claim, wherein the first reflective member (2) includes a mirror.

10. The camera module of any preceding claim, wherein the first reflective member (2) further includes:
a support surface (23a) opposite to the first reflective surface; and
a connection surface (25a) connecting the first reflective surface to the support surface (23a),
wherein an acute angle is between the connection surface (25a) and the first reflective surface.

11. A camera module assembly, comprising:
a camera module as claimed as in any preceding claim; and
the image sensor (6) combined with the sensor support member (5), the image sensor (6) having a front surface configured to receive light reflected from the second reflective member (4),
wherein a normal line of the first reflective surface is parallel to the front surface of the image sensor (6).

12. The camera module assembly of claim 11, wherein the image sensor (6) includes a charge coupled device (CCD) or a complementary metal-oxide semiconductor image sensor (CIS).

## Patentansprüche

1. Kameramodul, das Folgendes umfasst:
ein erstes reflektierendes Element (2), das eine erste reflektierende Oberfläche einschließt;
ein Teleobjektiv (83), das in einer ersten Richtung (D1) von der ersten reflektierenden Oberfläche beabstandet ist;
ein zweites reflektierendes Element (4), das in einer zweiten Richtung (D2) von der ersten reflektierenden Oberfläche beabstandet ist, wobei die zweite Richtung (D2) die erste Richtung (D1) schneidet; und
ein Sensorträgerelement (5), der so konfiguriert ist, dass es einen Bildsensor (6) trägt,
wobei das zweite reflektierende Element (4) ein Pentaprisma einschließlich mehrerer seitlichen Oberflächen einschließt, wobei die mehreren Seitenflächen Folgendes einschließen:
eine zweite reflektierende Oberfläche (41), die so konfiguriert ist, dass sie Licht von der ersten reflektierenden Oberfläche zum Sensorträgerelement (5) hin reflektiert; und
eine dritte reflektierende Oberfläche (43), die so konfiguriert ist, dass sie das Licht von der ersten reflektierenden Oberfläche zur zweiten reflektierenden Oberfläche (41) hin reflektiert.
wobei das Sensorträgerelement (5) in einer dritten Richtung (D3) von der zweiten reflektierenden Oberfläche beabstandet ist, wobei die dritte Richtung (D3) sowohl die erste Richtung (D1) als auch die zweite Richtung (D2) schneidet.

2. Kameramodul nach einem vorstehenden Anspruch, weiter umfassend einen Stabilisator (1), der so konfiguriert ist, dass er eine Bewegung des ersten reflektierenden Elements (2) antreibt, wobei der Stabilisator (1) Folgendes einschließt:
einen reflektierenden Halter (13), der so konfiguriert ist, dass er das erste reflektierende Element (2) trägt;
ein Stabilisatorgehäuse (11) und
eine erste Betätigungsvorrichtung (17), die so konfiguriert ist, dass sie den reflektierenden Halter (13) relativ zum Stabilisatorgehäuse (11) bewegt.

3. Kameramodul nach Anspruch 2, wobei:
der Stabilisator (1) weiter einen Zwischenhalter (15) auf einer hinteren Oberfläche des reflektierenden Halters (13) einschließt, und
die erste Betätigungsvorrichtung (17) eine erste Spule, die in Bezug auf das Stabilisatorgehäuse (11) befestigt ist, und einen ersten Magneten (171), der mit einer hinteren Oberfläche des Zwischenhalters (15) kombiniert ist, einschließt.

4. Kameramodul nach Anspruch 3, weiter umfassend eine zweite Spule (193), wobei die erste Spule (173) in der ersten Richtung (D1) von der zweiten Spule (193) beabstandet ist.

5. Kameramodul nach einem der Ansprüche 2 bis 4, wobei:
der Stabilisator (1) weiter eine zweite Betätigungsvorrichtung (11) einschließt, die so konfiguriert ist, dass sie den reflektierenden Halter (13) relativ zum Stabilisatorgehäuse (11) bewegt, und
die zweite Betätigungsvorrichtung (11) eine zweite Spule (193), die in Bezug auf das Stabilisatorgehäuse (11) befestigt ist, und einen zweiten Magneten (191) auf einer seitlichen Oberfläche des reflektierenden Halters (13) einschließt.

6. Kameramodul nach einem vorstehenden Anspruch, wobei eine Achse des Teleobjektivs (83) parallel zur ersten Richtung (D1) verläuft.

7. Kameramodul nach einem vorstehenden Anspruch, wobei das erste reflektierende Element (2) so konfiguriert ist, dass es Licht reflektiert, das von außerhalb des Kameramoduls empfangen wird, und wobei der Bildsensor (6) so konfiguriert ist, dass er Licht empfängt, das vom zweiten reflektierenden Element (4) reflektiert wird.
wobei die erste reflektierende Oberfläche (2) so konfiguriert ist, dass sie Licht auf das zweite reflektierende Element (4) reflektiert,
wobei das zweite reflektierende Element (4) die dritte reflektierende Oberfläche (43) einschließt, die so konfiguriert ist, dass sie das von der ersten reflektierenden Oberfläche reflektierte Licht reflektiert, und
wobei die zweite reflektierende Oberfläche (41) so konfiguriert ist, dass sie Licht von der dritten reflektierenden Oberfläche zu dem Sensorträgerelement (5) hin reflektiert,
wobei die erste reflektierende Oberfläche eine erste Normale aufweist,
wobei die zweite reflektierende Oberfläche eine zweite Normale (N2) aufweist,
wobei die dritte reflektierende Oberfläche eine dritte Normale (N3) aufweist und sich die zweite Normale und die dritte Normale in einem Punkt schneiden und
wobei sich die erste Normale und eine Ebene in einem Punkt schneiden, wobei die Ebene durch die zweite Normale und die dritte Normale definiert ist.

8. Kameramodul nach einem vorstehenden Anspruch, wobei das Teleobjektiv (83) so konfiguriert ist, dass ermöglicht wird, dass Licht von außerhalb des Kameramoduls durch das Teleobjektiv (83) hindurchgeht, bevor es das erste reflektierende Element (2) erreicht.

9. Kameramodul nach einem vorstehenden Anspruch, wobei das erste reflektierende Element (2) einen Spiegel einschließt.

10. Kameramodul nach einem vorstehenden Anspruch, wobei das erste reflektierende Element (2) weiter Folgendes einschließt:
eine der ersten reflektierenden Oberfläche gegenüberliegende Trägeroberfläche (23a); und
eine Verbindungsoberfläche (25a), die die erste reflektierende Oberfläche mit der Trägeroberfläche (23a) verbindet,
wobei zwischen der Verbindungsoberfläche (25a) und der ersten reflektierenden Oberfläche ein spitzer Winkel besteht.

11. Kameramodulanordnung, die Folgendes umfasst:
ein Kameramodul nach einem vorstehenden Anspruch; und
den Bildsensor (6), kombiniert mit dem Sensorträgerelement (5), wobei der Bildsensor (6) eine vordere Oberfläche aufweist, die so konfiguriert ist, dass sie Licht empfängt, das vom zweiten reflektierenden Element (4) reflektiert wird.
wobei eine Normale der ersten reflektierenden Oberfläche parallel zur vorderen Oberfläche des Bildsensors (6) verläuft.

12. Kameramodulanordnung nach Anspruch 11, wobei der Bildsensor (6) eine ladungsgekoppelte Vorrichtung (CCD) oder einen Komplementär-Metalloxid-Halbleiter-Bildsensor (CIS) einschließt.

## Revendications

1. Module de caméra, comprenant :
un premier élément réfléchissant (2) incluant une première surface réfléchissante;
un téléobjectif (83) espacé de la première surface réfléchissante dans une première direction (DI) ;
un second élément réfléchissant (4) espacé de la première surface réfléchissante dans une deuxième direction (D2), la deuxième direction (D2) coupant la première direction (D1) ; et
un élément de support de capteur (5) configuré pour supporter un capteur d'image (6),
dans lequel le second élément réfléchissant (4) inclut un prisme pentagonal incluant de multiples surfaces latérales, les multiples surfaces latérales incluant :
une deuxième surface réfléchissante (41) configurée pour réfléchir la lumière provenant de la première surface réfléchissante vers l'élément de support du capteur (5) ; et
une troisième surface réfléchissante (43) configurée pour réfléchir la lumière provenant de la première surface réfléchissante vers la deuxième surface réfléchissante (41),
dans lequel l'élément de support du capteur (5) est espacé de la deuxième surface réfléchissante dans une troisième direction (D3), la troisième direction (D3) coupant chacune de la première direction (D1) et de la deuxième direction (D2).

2. Module de caméra selon une quelconque revendication précédente, comprenant en outre un stabilisateur (1) configuré pour entraîner un mouvement du premier élément réfléchissant (2), dans lequel ledit stabilisateur (1) inclut :
un support réfléchissant (13) configuré pour supporter le premier élément réfléchissant (2) ;
un boîtier de stabilisateur (11) ; et
un premier actionneur (17) configuré pour entraîner le support réfléchissant (13) à se déplacer par rapport au boîtier du stabilisateur (11).

3. Module de caméra selon la revendication 2, dans lequel :
le stabilisateur (1) inclut en outre un support intermédiaire (15) sur une surface arrière du support réfléchissant (13), et
le premier actionneur (17) inclut une première bobine fixée par rapport au boîtier du stabilisateur (11) et un premier aimant (171) combiné avec une surface arrière du support intermédiaire (15).

4. Module de caméra selon la revendication 3, comprenant en outre une seconde bobine (193), dans lequel la première bobine (173) est espacée de la seconde bobine (193) dans la première direction (D1).

5. Module caméra selon l'une quelconque des revendications 2 à 4, dans lequel :
le stabilisateur (1) inclut en outre un second actionneur (11) configuré pour entraîner le support réfléchissant (13) à se déplacer par rapport au boîtier du stabilisateur (11), et
le second actionneur (11) inclut une seconde bobine (193) fixée par rapport au boîtier du stabilisateur (11), et un second aimant (191) sur une surface latérale du support réfléchissant (13).

6. Module de caméra selon une quelconque revendication précédente, dans lequel un axe du téléobjectif (83) est parallèle à la première direction (D1).

7. Module de caméra selon une quelconque revendication précédente, dans lequel le premier élément réfléchissant (2) est configuré pour réfléchir la lumière reçue de l'extérieur du module de caméra, dans lequel le capteur d'image (6) est configuré pour recevoir la lumière réfléchie depuis le second élément réfléchissant (4),
dans lequel la première surface réfléchissante (2) est configurée pour réfléchir la lumière vers le second élément réfléchissant (4),
dans lequel le second élément réfléchissant (4) inclut la troisième surface réfléchissante (43) configurée pour réfléchir la lumière réfléchie depuis la première surface réfléchissante, et
dans lequel la deuxième surface réfléchissante (41) est configurée pour réfléchir la lumière depuis la troisième surface réfléchissante vers l'élément de support du capteur (5),
dans lequel la première surface réfléchissante présente une première ligne normale,
dans lequel la deuxième surface réfléchissante présente une deuxième ligne normale (N2),
dans lequel la troisième surface réfléchissante présente une troisième ligne normale (N3), et la deuxième ligne normale et la troisième ligne normale se croisent en un point, et
dans lequel la première droite normale et un plan se coupent en un point, le plan étant défini par la deuxième ligne normale et la troisième ligne normale.

8. Module de caméra selon une quelconque revendication précédente, dans lequel le téléobjectif (83) est configuré pour permettre à la lumière externe au module de caméra de traverser le téléobjectif (83) avant d'atteindre le premier élément réfléchissant (2).

9. Module de caméra selon une quelconque revendication précédente, dans lequel le premier élément réfléchissant (2) inclut un miroir.

10. Module de caméra selon une quelconque revendication précédente, dans lequel le premier élément réfléchissant (2) inclut en outre :
une surface de support (23a) opposée à la première surface réfléchissante ; et
une surface de liaison (25a) reliant la première surface réfléchissante à la surface de support (23a),
dans lequel un angle aigu existe entre la surface de liaison (25a) et la première surface réfléchissante.

11. Ensemble module de caméra, comprenant :
un module de caméra tel que revendiqué dans une quelconque revendication précédente ; et
le capteur d'image (6) combiné avec l'élément de support du capteur (5), le capteur d'image (6) présentant une surface avant configurée pour recevoir la lumière réfléchie depuis le second élément réfléchissant (4),
dans lequel une ligne normale de la première surface réfléchissante est parallèle à la surface avant du capteur d'image (6).

12. Ensemble module de caméra selon la revendication 11, dans lequel le capteur d'image (6) inclut un dispositif à transfert de charge (CCD) ou un capteur d'image à semiconducteur métal-oxyde complémentaire (CIS).
